# EUROPÄISCHE PATENTANMELDUNG

(11) **EP 2 562 321 A2**
(43) Veröffentlichungstag der Anmeldung: **27.02.2013**
(21) Anmeldenummer: 12004910.1
(22) Anmeldetag: 02.07.2012
(51) Int. Cl.: E04B 1/78

(54) **Dämmmaterial und Verfahren zur Herstellung eines Dämmmaterials**

(30) Priorität: 25.08.2011 DE 102011111588
(71) Anmelder: SCHWENK Dämmtechnik GmbH & Co KG, 86899 Landsberg am Lech (DE)
(72) Erfinder: Schiffke, Peter, Dipl.-Ing., 86925 Fuchstal (DE)
(74) Vertreter: Leinweber & Zimmermann

(57) **Zusammenfassung**

Die Erfindung betrifft ein Dämmmaterial mit mindestens zwei bahnenförmigen Dämmschichten, wobei die Dämmschichten in einer bei ebener Anordnung senkrecht zur Bahnebene verlaufenden Dickenrichtung übereinander angeordnet und über eine dazwischen angeordnete, sich von den Dämmschichten unterscheidende Funktionsschicht miteinander verbunden sind.

## Beschreibung

Die Erfindung betrifft ein Dämmmaterial mit mindestens zwei bahnenförmigen Dämmschichten sowie ein Verfahren zum Herstellen eines derartigen Dämmmaterials.

Dämmmaterialien werden bspw. zur Wärmedämmung von Gebäuden eingesetzt. Die Dämmmaterialien können dazu in Form von starren Dämmplatten vorliegen, welche zur Herstellung von Wärmedämmverbundsystemen einsetzbar sind. Derartige Wärmedämmverbundsysteme umfassen neben auf dem bestehenden Untergrund (z. B. Ziegel, Kalksandstein, Beton, ...) befestigten Dämmplatten eine aus Armierungsmörtel und Armierungsgewebe bestehende Armierungsschicht und einen auf der Armierungsschicht aufgebrachten Außenputz. Zusätzlich können noch Schalldämmplatten oder weitere Schichten, z. B. zur Erhöhung der Feuerwiderstandsdauer und/oder zur Einstellung der Wasserdampfdiffusion, eingesetzt werden. Bei der Herstellung entsprechender Wärmedämmverbundsysteme werden die einzelnen Schichten nacheinander auf dem bestehenden Untergrund aufgebracht, bis die fertige Struktur durch den Oberputz abgeschlossen wird.

Sofern keine Druckfestigkeit der Dämmmaterialien erforderlich ist, können Dämmmaterialien auch in Form von weichen bzw. nachgiebigen Dämmmatten vorliegen. Beispiele für Anwendungen, bei denen Dämmmaterialien nicht druckfest sein müssen, sind Zwischensparrendämmungen als Dachdämmungen, Dämmungen im Holzrahmenbau, Dämmungen in leichten Trennwänden und Dämmungen bei vorgehängten Fassaden . In beiden Ausführungsarten, also sowohl bei Dämmplatten als auch bei Dämmmatten, können die Dämmmaterialien mehrere übereinander angeordnete Dämmschichten aufweisen. Zusätzlich sind in der DE 20 2008 013 342.4 auch Dämmelemente beschrieben, die auf einer Begrenzungsfläche eine Reflexionsschicht zur Vermeidung einer übermäßigen Aufheizung der gedämmten Gebäude oder zur Speicherung von Wärmestrahlung in gedämmten Gebäuden aufweisen.

Bei den beschriebenen Anwendungen ist der Erhalt einer zufriedenstellenden Dämmung unter gleichzeitiger Sicherstellung anderer gewünschter Eigenschaften, wie etwa Festigkeit, Schallschutz, Brandschutz u. dgl., mit einem hohen Arbeitsaufwand auf der Baustelle verbunden.

Angesichts dieser Probleme im Stand der Technik liegt der Erfindung die Aufgabe zugrunde, Dämmmaterialien bereitzustellen, mit denen eine die gewünschten Eigenschaften gewährleistende Gebäudedämmung mit geringem Arbeitsaufwand verwirklicht werden kann.

Erfindungsgemäß wird diese Aufgabe durch eine Weiterbildung der bekannten Dämmmaterialien gelöst, die im wesentlichen dadurch gekennzeichnet ist, daß die Dämmschichten in einer bei einer ebenen Anordnung senkrecht zur Bahnebene verlaufenden Dickenrichtung übereinander angeordnet und über eine dazwischen angeordnete, sich von den Dämmschichten unterscheidende Funktionsschicht miteinander verbunden sind.

Das erfindungsgemäße Dämmmaterial weist demnach eine beidseitig von den Dämmschichten abgedeckte Funktionsschicht auf, welche "Online" während der Produktion des Dämmmaterials eingearbeitet werden kann und den Zusammenhalt des Dämmmaterials gewährleistet. Dadurch entfällt ein zusätzlicher Arbeitsaufwand bei der Erstellung der Gebäudedämmung vor Ort, wodurch die Bauarbeiten erleichtert werden. Darüber hinaus kann die Verwendung eines erfindungsgemäßen Dämmmaterials auch zur Materialeinsparung führen, weil der Einsatz eines vorgefertigten Verbundwerkstoffs mit weniger Verschnitt erfolgen kann als die Verwendung voneinander getrennter Stoffe.

Es hat sich gezeigt, daß die Dämmeigenschaften der Dämmschicht durch die dazwischen angeordnete Funktionsschicht nicht beeinträchtigt werden, während die Dämmschichten eine Schutzfunktion für die Funktionsschicht erfüllen können.

Die Dämmschichten weisen vorzugsweise eine Wärmeleitfähigkeit λ von weniger als 0,05, vorzugsweise weniger als 0,04, besonders bevorzugt 0,035 W/mK oder weniger, auf. Im besonderen bei weichen bzw. nachgiebigen Dämmmatten, bspw. aus Mineralwolle gemäß DIN EN 13 162 oder aus Holzfasern gemäß DIN EN 13 171 kann es bei vertikalen Anwendungen, wie etwa im Holzrahmenbau und/oder zwischen den Sparren, dazu kommen, daß die Dämmmatten "zusammensacken", was zu Fehlstellen und somit zu Wärmebrücken führen kann. Dieser Mangel kann durch ein erfindungsgemäßes Dämmmaterial beseitigt werden, wenn die werksseitig eingebrachte Funktionsschicht in mindestens einer parallel zur Bahnebene verlaufenden Richtung eine größere Zugfestigkeit aufweist als die Dämmschicht. In diesem Fall wirkt die Funktionsschicht als Stützvlies oder Stützgewebe, das eine Verbesserung der Festigkeit gewährleistet und komplementäre Funktionen aufweisen kann. Das führt zu einer Aussteifung des Dämmmaterials, die einem möglichen "Absacken" entgegenwirkt und auch die Klemmkraft, z. B. bei einem Klemmfilz, erhöht. Zusätzlich kann das Dämmmaterial auch noch mechanisch fixiert und dadurch gegen "Absacken" gesichert werden. Die mechanische Fixierung kann bspw. mit Hilfe von Kunststoffdübeln oder das Dämmmaterial durchsetzenden Kunststoffhaltern erfolgen. Unter dem Begriff "Absacken" wird im Rahmen der Erfindung eine Erhöhung der Dicke von in einer Vertikalebene eingebauten Dämmschichten in deren unteren Bereich unter gleichzeitiger Verringerung der Höhe und/oder Ausdünnung im oberen Bereich der Dämmschichten verstanden. Diesem Effekt kann durch Einsatz von Funktionsschichten mit erhöhter Zugfestigkeit entgegengewirkt werden, wobei die Funktionsschicht das Dämmmaterial in seiner Sollposition hält. Herkömmliches Dämmmaterial hat eine Zugfestigkeit von 0,001 bis 0,006 N/mm². Das Verhältnis der Zugfestigkeit der Funktionsschicht zur Zugfestigkeit der Dämmschicht kann im Rahmen der Erfindung mehr als 2, aber auch mehr als 5 oder 10 betragen.

In einigen Fällen wird zusätzlich zur Wärmedämmung auch noch die Funktion einer Dampfsperre oder Dampfbremse im Bereich der Gebäudefassade oder des Daches benötigt. Zu diesem Zweck kann die Funktionsschicht eine größere diffusionsäquivalente Luftschichtdicke (Produkt aus Wasserdampfdiffusionswiderstandsbeiwert und Stoffdicke) aufweisen als die Dämmschichten. Die diffusionsäquivalente Luftschichtdicke des Dämmmaterials wird dann regelmäßig durch die Funktionsschicht bestimmt. Die Funktionsschicht kann dazu eine werksseitig in das Dämmmaterial eingebrachte Kunststoffbahn, insbes. aus PE (Polyethylen), PA (Polyamid), PES ( Polyester) und/oder PUR (Polyurethan), aufweisen. Dabei kann davon ausgegangen werden, daß der Wasserdampfdiffusionskoeffizient herkömmlicher Dämmmaterialien dem Wasserdampfdiffusionskoeffizient von Luft etwa entspricht, also etwa 1 beträgt, während der Wasserdampfdiffusionskoeffizient der Kunststofffolie deutlich niedriger ist. Der Wasserdampfdiffusionskoeffizient wird daher durch die Funktionsschicht bestimmt.

Gemäß einer weiteren Ausführungsform der Erfindung kann durch Einbringen der Funktionsschicht die Feuerwiderstandsdauer erhöht werden. Das ist im besonderen bei Holzfasern enthaltenden Stoffen vorteilhaft. Durch das Einbringen einer Funktionsschicht kann die Feuerwiderstandsdauer der Gesamtkonstruktion erhöht werden. Dazu kann die Funktionsschicht bspw. kristallin gebundenes Wasser enthalten. Im Brandfall wird so Wasserdampf freigesetzt, der die Gesamtkonstruktion kühlt und dadurch die Feuerwiderstandsdauer erhöht. Die gewünschte Feuerwiderstandsdauer kann durch entsprechende Dimensionierung der Funktionsschicht eingestellt werden.

Zusätzlich oder alternativ kann durch Einbringen der Funktionsschicht eine bessere Schallabsorption der Gesamtkonstruktion erreicht werden. Dazu einsetzbare Funktionsschichten können ein Schallschluckvlies und/oder eine Sand enthaltende Matte aufweisen. Der Schallabsorptionskoeffizient herkömmlicher Faserdämmstoffe ist frequenz- und dickenabhängig und beträgt etwa 0,1 bis 0,5. Er kann durch Anbringen der Funktionsschicht ggf. auch frequenzabhängig deutlich erhöht werden. Demgemäß wird der Schallabsorptionskoeffizient erfindungsgemäßer Dämmmaterialien durch die Gesamtkonstruktion, bestehend aus Dämmschichten und Funktionsschicht, bestimmt.

Im Rahmen der Erfindung können auch mit Nanopartikeln versetzte Funktionsschichten zur Verbesserung der Dämmeigenschaften eingesetzt werden.

Die Dämmschichten erfindungsgemäßer Dämmmaterialien können Mineral- und/oder Holzfasern aufweisen. Dabei umfaßt der Oberbegriff "Mineralfaser" Glasfasern und Steinwollefasern. Die Rohdichte von aus Mineralfasern hergestellten Dämmmateriatien beträgt 10 bis 70 kg/m³, wobei mit höher werdender Rohdichte eine geringere Wärmeleitfähigkeit erreicht wird, so daß auch bei diesen Materialien bei höherer Rohdichte eine besonders gute Wärmedämmung erreicht wird. Das gilt auch für aus Holzfasern hergestellte Dämmmaterialien mit einer Rohdichte zwischen 130 und 190 kg/m³, so daß auch bei diesen Materialien bei geringer Rohdichte eine besonders gute Wärmedämmung erreicht werden kann. Als Funktionsschicht einsetzbare Glasvliese oder Glasgewebe können zum Erhalt der gewünschten Eigenschaften eine höhere Rohdichte, bspw. im Bereich zwischen 150 und 200 kg/m³, aufweisen. Dabei kann das Verhältnis der Dichte der Funktionsschicht zur Dichte der Dämmschicht mehr als 1,5, insbes. mehr als 2, besonders bevorzugt 3 oder mehr, insbes. 4 oder mehr, betragen.

Wenngleich durch die erhöhte Dichte der Funktionsschicht die Wärmeleitfähigkeit ebenfalls geringfügig erhöht wird, macht sich dieser Effekt kaum bemerkbar, weil die Funktionsschicht zum Erhalt der gewünschten Funktion nur eine geringe Dicke aufweisen muß. Dabei kann das Verhältnis der Dicke der Dämmschicht zur Dicke der Funktionsschichten, die zur Verbesserung der Schallisolation dienen, und der Funktionsschichten, die zur Verbesserung der Wärmedämmung dienen können, mehr als 10 betragen. Die gewünschten Eigenschaften werden aber kaum noch erreicht, wenn dieses Verhältnis weniger als 100 beträgt. Bei Funktionsschichten, die zur Erhöhung der Stabilität eingesetzt werden sollen, kann das Verhältnis der Dicke der Dämmschicht zur Dicke der Funktionsschicht mehr als 100 betragen, wobei die gewünschten Eigenschaften kaum noch erreicht werden können, wenn dieses Verhältnis weniger als 5.000 beträgt.

Zur Herstellung einer Mineralfasern enthaltenden Dämmschicht werden Mineralfasern, wie etwa Glasfasern, zur Herstellung von Glaswolle bzw. Mineralwolle übereinandergewirbelt. Mineralfasern können vorab mit einem Bindemittel versehen sein. Anschließend wird die Mineralwolle bzw. Glaswolle auf eine Sollhöhe zusammengedrückt und dann in einem Härteofen ausgehärtet, so daß eine Mineralwollematte bzw. Glaswollematte bzw. - vlies oder auch -filz entsteht. Die Dicken entsprechender Produkte betragen 20 bis 300 mm. Sofern mit der Funktionsschicht die Zugfestigkeit des Dämmmaterials erhöht werden soll, kann die Funktionsschicht ein Glasgelege oder auch Glasgittergelege mit in vorgegebener Weise ausgerichteten Glasfasern aufweisen, die mit einem Bindemittel verbunden sind. Die Glas- bzw. Mineralfasern können darin vorzugsweise in etwa senkrecht zueinander verlaufenden Richtungen ausgerichtet sein. In diesen Richtungen können Zugkräfte besonders gut aufgenommen werden. Beim Einbringen von Glasgelege oder Glasgittergelege aufweisenden Funktionsschichten wird regelmäßig kein zusätzlicher Bindemitteleintrag benötigt.

Zusätzlich oder alternativ können auch Funktionsschichten zum Einsatz kommen, welche ein Glasfaser- bzw. Mineralfasergewebe aufweisen. Darunter versteht man gewebte Mineralfasern, wie etwa Textilfasern. Sie enthalten kein Bindemittel. Eine besonders starke Erhöhung der Zugfestigkeit wird hierbei in Richtung der Kettfäden erhalten, wobei auch eine nennenswerte Erhöhung der Zugfestigkeit in Richtung der Schußfäden beobachtet wird. Auch beim Einbringen derartiger Funktionsschichten ist regelmäßig kein zusätzlicher Bindemitteleintrag erforderlich.

Endlich kann die Funktionsschicht zum Erhalt der gewünschten Zugfestigkeit auch Glasfaser- bzw. Mineralfaservliese mit übereinandergewirbelten Glas- bzw. Mineralfasern aufweisen, wobei die Glas- bzw. Mineralfasern mit einem Bindemittel so verfestigt sind, daß die gewünschte Zugfestigkeit in allen Beanspruchungsrichtungen, also isotrop, erhalten wird und ggf. unter Einsatz von zusätzlichem Bindemittel eingebracht werden.

Zusätzlich zu der Funktionsschicht kann ein erfindungsgemäßes Dämmmaterial auch noch eine auf einer der Funktionsschicht abgewandten Begrenzungsfläche angebrachte zusätzliche Beschichtung aufweisen. Dabei ist auch daran gedacht, beide äußeren Begrenzungsflächen des Dämmmaterials mit einer zusätzlichen Beschichtung auszustatten. Durch die zusätzlichen Beschichtungen auf den äußeren Begrenzungsflächen kann eine weitere Verbesserung der Festigkeit erreicht werden. Darüber hinaus ist auch eine gewünschte gestalterische Wirkung mit Hilfe der zusätzlichen Beschichtungen erzielbar.

Endlich können die zusätzlichen Beschichtungen auch als Reflexionsschicht ausgeführt sein. In diesem Zusammenhang wird auf den Offenbarungsgehalt der DE 20 2008 013 342. 4 Bezug genommen.

Bei einem erfindungsgemäßen Verfahren zum Herstellen eines erfindungsgemäßen Dämmmaterials werden zwei ggf. durch Auftrennen eines Rohvlieses erhaltene Dämmschichten über eine Funktionsschicht miteinander verbunden. Dabei kann die Herstellung "Online" während der Produktion der Faserdämmstoffe, wie etwa aus Mineral- bzw. Glasfasern, erfolgen. Dazu wird das Rohvlies in Längsrichtung und vorzugsweise etwa parallel zur Dickenrichtung getrennt, die Funktionsschicht zugeführt und die getrennten Rohvliese übereinandergelegt, so daß sich die Funktionsschicht zur Bildung der gewünschten Verbundstruktur zwischen diesen Rohvliesen befindet. In einem weiteren Produktionsschritt werden Rohvliese und Funktionsschicht mit einem Bindemittel kraftschlüssig miteinander verbunden und ggf. in Dickenrichtung verdichtet. Dazu können die Fasern des Rohvlieses bereits mit einem Bindemittel beschichtet sein. Zusätzlich oder alternativ kann auch ein zusätzlicher Bindemittel- oder Kleberauftrag erfolgen. Bei einem mit erfindungsgemäßen Verfahren hergestellten erfindungsgemäßen Dämmmaterial bilden die Dämmschichten und die Funktionsschicht quasi eine Einheit, die sich nur noch mit beachtlichem Kraftaufwand trennen läßt.

Zusätzlich oder alternativ zu einer Bindemittelverfestigung ist auch eine Nadelung zur Herstellung einer Verbindung zwischen den Dämmschichten über die Funktionsschicht denkbar. Auf diese Weise können die Vliese mit der Funktionsschicht kraftschlüssig verbunden werden.

Endlich ist auch eine nachträgliche Einbringung der Funktionsschicht denkbar. Dabei wird die Funktionsschicht nachträglich zwischen zwei bereits fertiggestellte Dämmmatten, -vliese oder -filze angeordnet und mittels einem Kleber kraftschlüssig mit den Dämmschichten verbunden.

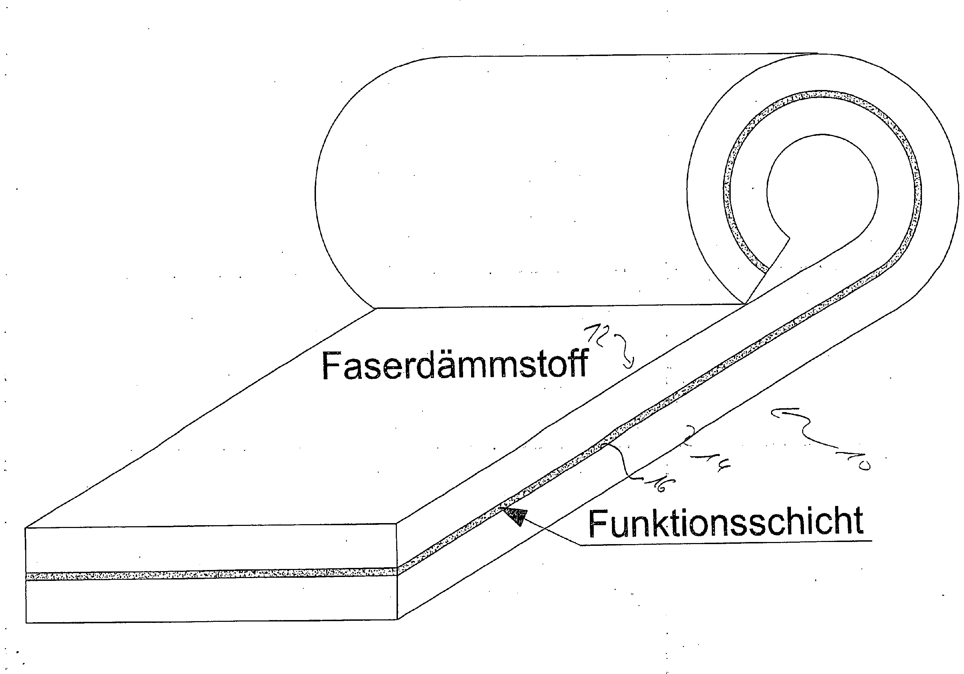

Nachstehend wird die Erfindung unter Bezugnahme auf die Zeichnung, auf die hinsichtlich aller erfindungswesentlichen und in der Beschreibung nicht näher herausgestellten Einzelheiten Bezug genommen wird, erläutert.

Die einzige Figur der Zeichnung zeigt eine schematische Darstellung eines erfindungsgemäßen Dämmmaterials.

Das in der Zeichnung dargestellte Dämmmaterial liegt als zu einem Wickel aufwikkelbare Dämmmatte 10 vor. Die Dämmmatte 10 umfaßt Dämmschichten 12 und 14, welche bei einer ebenen Anordnung in einer senkrecht zur Bahnebene verlaufenden Dickenrichtung übereinander angeordnet sind. Mittig zwischen den Dämmschichten 12 und 14 ist eine Funktionsschicht 16 angeordnet, über die die Dämmschichten 12 und 14 miteinander verbunden sind.

Die Erfindung ist nicht auf das anhand der Zeichnung erläuterte Ausführungsbeispiel beschränkt. Vielmehr ist auch an den Einsatz von erfindungsgemäßen Dämmmaterialien in Form von Dämmplatten mit starren Dämmschichten gedacht. Weiter kann die Funktionsschicht einen in der Zeichnung nicht erkennbaren mehrlagigen Aufbau aufweisen, bei dem jede Lage eine eigene Funktion erfüllt.

## Patentansprüche

1. Dämmmaterial mit mindestens zwei bahnenförmigen Dämmschichten (12, 14), **dadurch gekennzeichnet, daß** die Dämmschichten (12, 14) in einer bei ebener Anordnung senkrecht zur Bahnebene verlaufenden Dickenrichtung übereinander angeordnet und über eine dazwischen angeordnete, sich von den Dämmschichten (12, 14) unterscheidende Funktionsschicht (16) miteinander verbunden sind.

2. Dämmmaterial nach Anspruch 1, **dadurch gekennzeichnet, daß** die Funktionsschicht (16) in mindestens einer parallel zur Bahnebene verlaufenden Richtung eine größere Zugfestigkeit aufweist als die Dämmschichten (12, 14).

3. Dämmmaterial nach einem der vorhergehenden Ansprüche, **dadurch gekennzeichnet, daß** die Funktionsschicht (16) zur Bildung einer Dampfbremse eine größere diffusionsäquivalente Luftschichtdicke aufweist als die Dämmschichten (12, 14).

4. Dämmmaterial nach einem der vorhergehenden Ansprüche, **dadurch gekennzeichnet, daß** durch Einbringen der Funktionsschicht (16) eine höhere Feuerwiderstandsdauer der Gesamtkonstruktion erhalten wird.

5. Dämmmaterial nach Anspruch 4, **dadurch gekennzeichnet, daß** die Funktionsschicht (16) zum Erhalt einer höheren Feuerwiderstandsdauer kristallin gebundenes Wasser enthält.

6. Dämmmaterial nach einem der vorhergehenden Ansprüche, **dadurch gekennzeichnet, daß** durch das Einbringen der Funktionsschicht (16) eine bessere Schallabsorption erhalten wird.

7. Dämmmaterial nach einem der vorhergehenden Ansprüche, **dadurch gekennzeichnet, daß** mindestens eine Dämmschicht (12 bzw. 14) Mineral- und/oder Holzfasern aufweist.

8. Dämmmaterial nach einem der vorhergehenden Ansprüche, **dadurch gekennzeichnet, daß** die Funktionsschicht (16) ein Glasgelege, Glasgewebe und/oder Glasvlies aufweist.

9. Dämmmaterial nach einem der vorhergehenden Ansprüche, **dadurch gekennzeichnet, daß** die Funktionsschicht (16) mehrlagig ausgeführt ist.

10. Dämmmaterial nach Anspruch 9, **dadurch gekennzeichnet, daß** eine Lage der Funktionsschicht (16) ein Glasgelege, ein Glasgewebe und/oder ein Glasvlies mit vorgegebener Zugfestigkeit in mindestens einer Richtung aufweist.

11. Dämmmaterial nach Anspruch 9 oder 10, **dadurch gekennzeichnet, daß** eine Lage der Funktionsschicht (16) eine Kunststoffbahn, insbes. aus PE (Polyethylen), PA (Polyamid), PES ( Polyester) und/oder PUR (Polyurethan), aufweist.

12. Dämmmaterial nach einem der Ansprüche 9 bis 11, **dadurch gekennzeichnet, daß** eine Lage der Funktionsschicht (16) ein Schallschluckvlies und/oder eine Sand enthaltende Matte (10) aufweist.

13. Dämmmaterial nach einem der vorhergehenden Ansprüche, **dadurch gekennzeichnet, daß** die Funktionsschicht (16) kraft- und/oder stoffschlüssig mit mindestens einer Dämmschicht (12 bzw. 14) verbunden ist, insbes. mit Hilfe eines Bindemittels und/oder einer Nadelung.

14. Dämmmaterial nach einem der vorhergehenden Ansprüche, **dadurch gekennzeichnet, daß** mindestens eine Dämmschicht (12 bzw. 14) auf einer der Funktionsschicht (16) abgewandten Begrenzungsfläche mit einer zusätzlichen Beschichtung ausgestattet ist.

15. Verfahren zum Herstellen eines Dämmmaterials nach einem der vorhergehenden Ansprüche, bei dem zwei ggf. durch Auftrennen eines Rohvlieses erhaltene Dämmschichten (12, 14) über eine Funktionsschicht (16) miteinander verbunden werden.
